(19) **Europäisches Patentamt**

**European Patent Office**

**Office européen des brevets**

(11) Veröffentlichungsnummer: **0 170 780**
**B1**

(12) **EUROPÄISCHE PATENTSCHRIFT**

(45) Veröffentlichungstag der Patentschrift:
**17.02.88**

(21) Anmeldenummer: **85104224.2**

(22) Anmeldetag: **06.04.85**

(51) Int. Cl.⁴: **B 23 K 9/04**, B 23 K 31/02

(54) **Verfahren zur Herstellung von rotationssymmetrisch räumlich gekrümmten Bauteilen aus Schweissgut.**

(30) Priorität: **19.06.84 DE 3422638**

(43) Veröffentlichungstag der Anmeldung:
**12.02.86 Patentblatt 86/7**

(45) Bekanntmachung des Hinweises auf die Patenterteilung:
**17.02.88 Patentblatt 88/7**

(84) Benannte Vertragsstaaten:
**AT CH FR GB IT LI SE**

(56) Entgegenhaltungen:
**DE - A - 2 629 571**

**WELDING AND METAL FABRICATION, Band 46, Nr. 5, Juni 1978, Seite 359, Haywards Heath, Sussex, GB; R. THOMPSON "How far is automation going?"**

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Million, Karl, Dr.-Ing., Am Grafenbusch 46, D-4200 Oberhausen 1 (DE)**
Erfinder: **Zimmermann, Horst, Ing., Genterstrasse 111, D-4200 Oberhausen 14 (DE)**

ACTORUM AG

Beschreibung

Die Erfindung betrifft ein Verfahren zur Herstellung eines rotationssymmetrisch räumlich gekrümmte Wandkonturen aufweisenden Bauteils aus Schweissgut durch dessen Aufbau mittels Viellagen-Auftragsschweissung von unten nach oben, wobei der Auftragsbereich des um seine Symmetrieachse als Rotationsachse drehbaren Bauteils in fortlaufend waagerechter Schweissposition an im Verlauf des Schweissgutauftrags von mindestens jeweils einer Schweissraupenlage unbewegten Schweissköpfen entlanggeführt wird, wobei die Rotationsachse x-x nach Massgabe des Fortschritts des lagenweisen Schweissgutauftrags schrittweise um eine waagerechte, zur Rotationsachse x-x senkrechte Achse gekippt wird.

Die Herstellung von Konstruktionsteilen vollständig aus Schweissgut ist unter dem Begriff Form-Schweissen bekannt. Dabei können hochwertige Erzeugnisse aus niedrig- und hochlegierten Stählen, wie z.B. Stutzen oder Kragen bzw. Übergangsteile für den Nuklearen Apparatebau, schnell und wirtschaftlich hergestellt werden, wo bei höchsten Werkstoffanforderungen genügende Materialqualitäten im Bauteil erreicht werden. Dabei wird als hochproduktives, mechanisiertes Schweissverfahren insbesondere das im Apparatebau vielseitig bewährte Unterpulverschweissverfahren (UP) verwendet. Wesentliche Vorteile bei der Herstellung von Konstruktionsteilen durch Form-Schweissen sind relativ kurze Herstellungszeiten, relativ geringer Fertigungsaufwand und die Möglichkeit der einteiligen Formgebung ohne Längsnaht.

Beim lagenweisen Auftragen von Schweissraupen nach üblichen Verfahren der UP-Auftragsschweissung mittels abschmelzenden Elektroden muss der Auftragsbereich einer Elektrode in fortlaufend waagerechter Schweissposition an unbewegten Schweissköpfen entlanggeführt werden. Dies bereitet bei der Herstellung von rotationssymmetrisch gekrümmten, insbesondere divergierende Wandkonturen aufweisenden Bauteilen mit fallweise grossen Abmessungen und mehrere Tonnen betragendem Gewicht erhebliche Schwierigkeiten, die dadurch noch vergrössert werden, dass eine minutiös exakte Führung der Schweissköpfe in der waagerechten Schweissposition erforderlich ist, um die geforderte hohe Materialgüte des entstehenden Bauteils ohne jeden Fehler zu gewährleisten. Bereits eine einzige Inkontinuität durch Abweichung von der vorgesehenen Schweisskopf-Führung würde bei der nachfolgenden Abnahmeprüfung zum Resultat führen, dass das fertige Bauteil als Ausschuss verworfen werden muss.

Aus der DE-A1-2 629 571 ist ein Verfahren zum Herstellen von Halbtorusschalen bekannt. Bei der Vorrichtung gemäss dieser Druckschrift rotiert und schwenkt das Werkstück und der Schweisskopf ist ebenfalls schwenkbar. Von einem derartigen Verfahren wird im Oberbegriff von Anspruch 1 der vorliegenden Erfindung ausgegangen. Nach dem in der DE-A1-2 629 571 beschriebenen Verfahren lassen sich jedoch nicht jede Art von räumlich gekrümmte Wandkonturen aufweisenden Bauteilen herstellen.

In WELDING AND METAL FABRICATION, Band 46, Nr. 5, Juni 1978, Seite 359, Haywards Heath, Sussex, GB; R. THOMPSON «How far is automation going?», wird u.a. ganz allgemein ausgeführt, dass eine neue Generation von Schweissmaschinen und auch Maschinen zum Schneiden von Metallen und für die Schweissnahtvorbereitung mit vorprogrammierten Steuerungen sich auf dem Markt durchgesetzt haben. Ein gespeicherter Schweissweg oder eine Schweissfolge lassen sich damit automatisch wiederholen.

Der Erfindung liegt die Aufgabe zugrunde, ein Verfahren zur Herstellung von rotationssymmetrisch räumlich gekrümmte Wandkonturen aufweisenden Bauteilen jeglicher Art durch Form-Schweissen aus Schweissgut anzugeben, mit welchem ein absolut fehlerloses Produkt von höchster Qualität herstellbar ist. Das Verfahren soll sich weiterhin durch hohe Wirtschaftlichkeit, unkomplizierte Durchführbarkeit und Übersichtlichkeit auszeichnen und sich insbesondere zur Durchführung mittels einer numerischen Steuerung nach Programm eignen.

Diese Aufgabe wird erfindungsgemäss dadurch gelöst, dass bei dem eingangs genannten Verfahren die Schweissköpfe zur Anpassung an die jeweils schrittweise geänderte Kipplage der Rotationsachse ebenfalls schrittweise und zugleich mit deren Änderung durch in zwei Richtungen steuerbare Bewegungsabläufe, und zwar in horizontaler, im Auftragsbereich zur Wandkontur radialer Richtung, und im Abstand zum Auftragsbereich in vertikaler Richtung, so eingestellt bzw. nachgestellt werden, dass ihre Verstellbahn von der jeweiligen Kipposition entsprechenden Kontaktpunkten zwischen Bauteilkontur und ihrer jeweils vertikalen Tangente definiert wird und die Schweissköpfe durch Führung in dieser Verstellbahn in einer zur Kippachse senkrechten Ebene die vorgesehene räumlich gekrümmte Bauform des Bauteils automatisch und programmierbar herstellen.

Weitere vorteilhafte Ausgestaltungen der Erfindung werden in den Unteransprüchen 2 - 6 angegeben.

Ausführungsbeispiele der Erfindung werden weiterhin anhand von Zeichnungen näher beschrieben. Es zeigen:

Fig. 1 in rein schematischer Darstellung eine Kipplage des in Herstellung befindlichen Bauteils;

Fig. 2 eine Vorrichtung zur Herstellung eines Bauteils, ebenfalls in schematischer Darstellung, von der Seite und teilweise im Schnitt,

Fig. 3 schematisch das Schweissen eines elliptischen Bodens und

Fig. 4 schematisch das Schweissen eines Korbbogenbodens.

Das erfindungsgemässe Verfahren kann wie folgt ausgeführt werden:

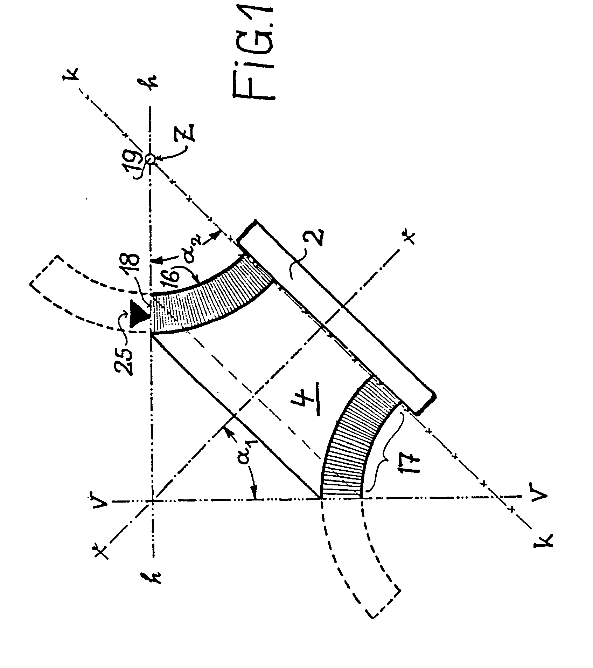

Das auf einem Drehtisch (2) aufgespannte Bauteil (4) in Fig. 1 ist, soweit es mit ausgezogenen Linien dargestellt ist, bereits durch Form-Schweissung in einzelnen Schweissraupenlagen (17) aufgebaut. Das Bauteil rotiert um die Rotationsachse x-x mit einer der Auftragsgeschwindigkeit der aufbauenden Schweissraupenlage (17) entsprechenden Umfangsgeschwindigkeit. Um den Auftragsbereich (18) des Bauteils (4) fortlaufend in waagerechter Schweissposition zu halten, ist die Rotationsachse x-x nach Massgabe des Fortschritts des lagenweisen Schweissgutauftrags (17) schrittweise um eine waagerechte, zur Rotationsachse x-x senkrechte Achse (19) gekippt. Der Auftrag des Schweissgutes ist rein symbolisch durch ein Dreieckzeichen (25) angedeutet. Dabei ergibt sich, dass der Winkel $\alpha_1$, den die gekippte Rotationsachse x-x mit der Vertikalen v-v einschliesst, gleich dem Winkel $\alpha_2$ ist, den eine vom Krümmungszentrum Z der Bauteilwand (16) über den Auftragsbereich (18) des Bauteils (4) hinaus verlängerte horizontale Linie h-h mit der Kippebene k-k einschliesst. Im gezeigten Beispiel fällt die Kippebene k-k mit der Kippachse (19) und dem Krümmungszentrum Z zusammen. Dies ist jedoch keine Bedingung für die Ausführung des Verfahrens. Die Kippebene k-k kann ohne weiteres gegenüber der gezeigten Lage parallel verschoben sein. Wesentlich ist, dass die Horizontale h-h das Krümmungszentrum Z der Bauteilwand (16) und den Auftragsbereich (18) verbindet. Damit ist die Forderung erfüllt, dass bei der Drehung des Bauteils (4) um die Rotationsachse x-x der Auftragsbereich (18) fortlaufend in waagerechter Schweissposition gehalten wird.

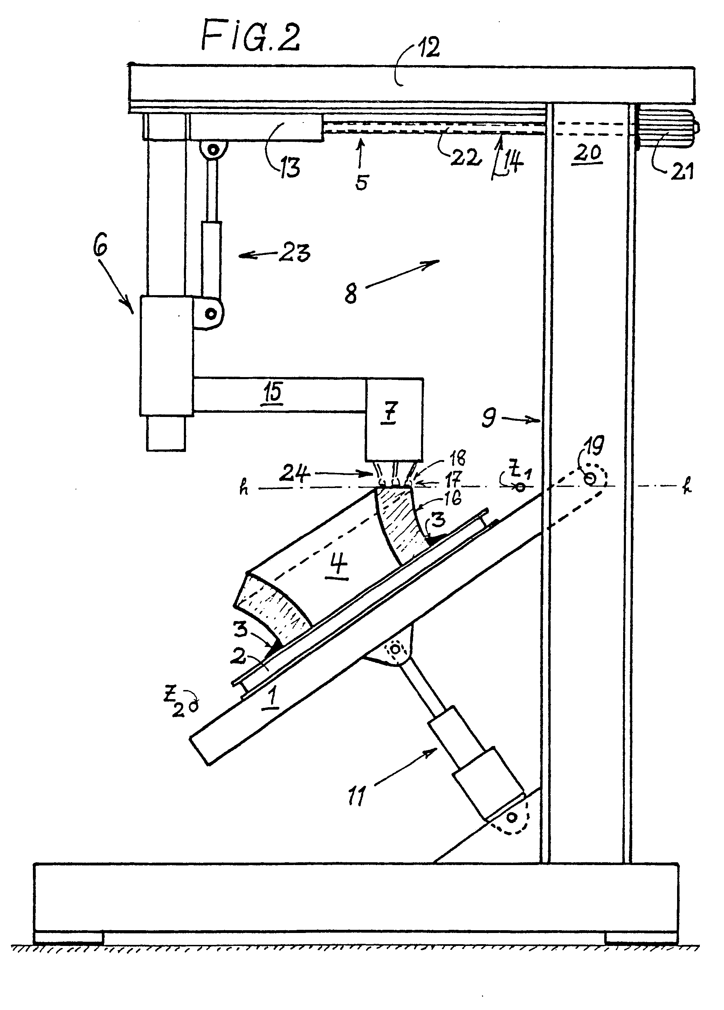

Eine hierfür geeignete Vorrichtung ist in rein schematischer Darstellung in Fig. 2 gezeigt. Das Bauteil (4) ist auf einem Drehtisch (2) mit Aufspannmitteln (3) aufgespannt. Der Drehtisch (2) befindet sich mit seinem (nicht dargestellten) Drehantrieb auf seinem Kippgestell (1). Dieses ist um die Kippachse (19) schwenkbar am Ständer (9) des Stahlgerüstes (8) angelenkt. Ein stufenlos verstellbarer Kippantrieb (11) sorgt für die Einhaltung einer vorbestimmten Kippstellung. Am Kopf (20) des Stahlgerüstes (8) ist ein Ausleger (12) angeordnet. Dieser dient zur Führung des Schweisskopfes (7) und weist einen horizontal verfahrbaren Führungsschlitten (13) auf. Dieser dient als horizontale Führung (5) zur Einstellung des Schweisskopfes (7). Zur vertikalen Einstellung des Schweisskopfes (7) dient eine vertikale Führung (6), die mit dem Schlitten (13) verbunden ist, und der Schlitten (13) ist mittels motorischer Bewegungsmittel, beispielsweise in Form eines Schrittmotors (21) und einer Bewegungsspindel (22), in horizontaler Richtung schrittweise einstellbar. Zum Antrieb der vertikalen Führung (6) ist beispielsweise eine hydraulisch betätigbare Kolben/Zylinder-Einheit (23) vorgesehen. An der vertikalen Führung (6) ist der Schweisskopf (7) mittels einer Halterung (15) angeordnet. Im gezeigten Ausführungsbeispiel wird die Auftragsschweissung jeder Schweissraupenlage (17) mit drei parallel geführten Elektroden (24) gleichzeitig ausgeführt. Im gezeigten Beispiel fällt das Krümmungszentrum Z1 der Bauteilwand (16) nicht mit der Kippachse (19) zusammen. Dagegen verbindet eine Horizontale h-h das Krümmungszentrum Z1 mit dem Auftragsbereich (18) der Elektroden (24).

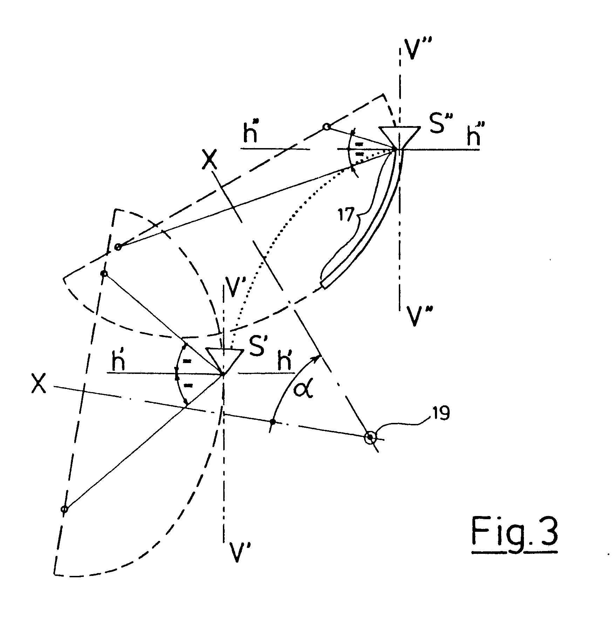

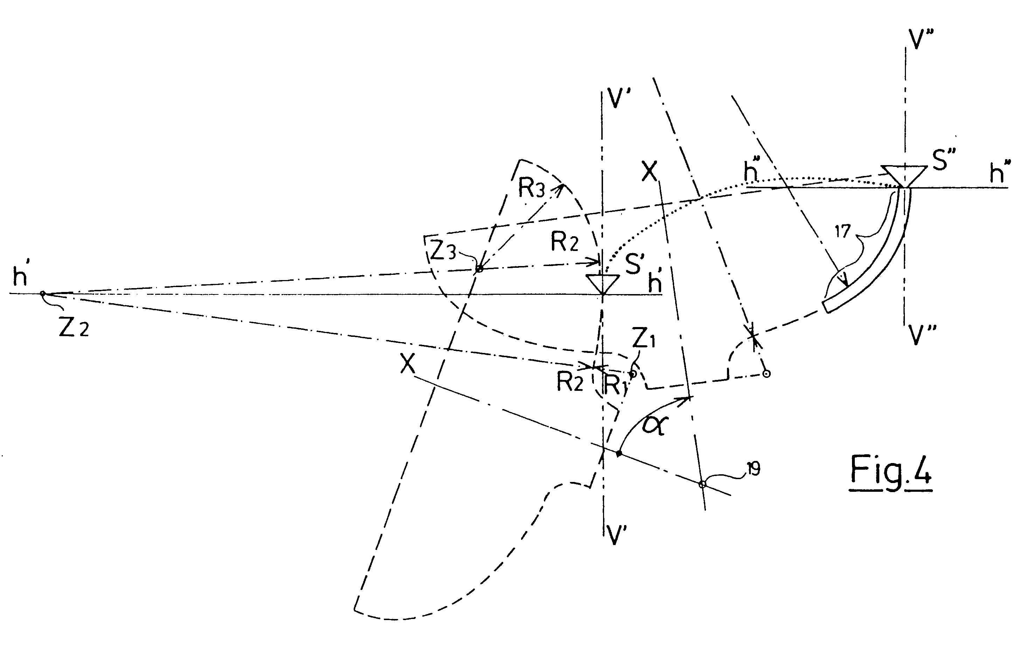

In Fig. 3 und 4 sind in den schematischen Darstellungen die Extrempositionen für Anfang und Ende eines beliebigen Schweissbereiches (17) gezeigt, wobei die Schweisspunkte mit S' und S'', die vertikalen Tangenten mit V' und V'' und die horizontalen Schweissebenen mit h' und h'' bezeichnet sind.

## Patentansprüche

1. Verfahren zur Herstellung eines rotationssymmetrisch räumlich gekrümmte Wandkonturen aufweisenden Bauteils (4) aus Schweissgut durch dessen Aufbau mittels formgebender Viellagen-Auftragsschweissung von unten nach oben, wobei der Auftragsbereich (18) des um seine Rotationsachse x-x drehbaren Bauteils (4) in fortlaufend waagerechter Schweissposition an im Verlauf des Schweissgutauftrags von mindestens jeweils einer Schweissraupenlage (17) unbewegten Schweissköpfen (7) entlanggeführt wird, wobei die Rotationsachse x-x nach Massgabe des Fortschritts des lagenweisen Schweissgutauftrags (17) schrittweise um eine waagerechte, zur Rotationsachse x-x senkrechte Achse (19) gekippt wird, dadurch gekennzeichnet, dass die Schweissköpfe (7) zur Anpassung an die jeweils schrittweise geänderte Kipplage der Rotationsachse x-x ebenfalls schrittweise und zugleich mit deren Änderung durch in zwei Richtungen steuerbare Bewegungsabläufe, und zwar in horizontaler, im Auftragsbereich zur Wandkontur (16) radialer Richtung, und im Abstand zum Auftragsbereich in vertikaler Richtung, so eingestellt bzw. nachgestellt werden, dass ihre Verstellbahn von der jeweiligen Kippposition entsprechenden Kontaktpunkten zwischen Bauteilkontur und ihrer jeweils vertikalen Tangente definiert wird und die Schweissköpfe (7) durch Führung in dieser Verstellbahn in einer zur Kippachse (19) senkrechten Ebene die vorgesehene räumlich gekrümmte Bauform des Bauteils (4) automatisch und programmierbar herstellen.

2. Verfahren nach Anspruch 1, dadurch gekennzeichnet, dass dass zur Programmsteuerung der Verstellbahn der Schweissköpfe (7) ein in einer zur Kippachse (19) senkrechten Ebene liegendes Koordinatensystem, vorzugsweise mit Zentrum an der Kippachse (19), verwendet wird.

3. Verfahren nach Anspruch 1 und 2, dadurch gekennzeichnet, dass für jede Schweissraupenlage (17) ein Kippwinkelschritt vorgegeben wird, der dem Winkelmass der gesamten Krümmung der Wandkontur (16), geteilt durch die zum Aufbau des Bauteils (4) im Krümmungsbereich erforderliche Anzahl von Schweissraupenlagen (17) entspricht.

4. Verfahren nach einem der Ansprüche 1 bis 3, dadurch gekennzeichnet, dass der Kippwinkel nach Aufbringen von je einer oder mehrerer die gesamte Wandbreite der Bauteilwand (16) ausfüllenden Schweissraupenlagen (17) um einen oder mehrere zusammengefasste Winkelschritte geändert wird.

5. Verfahren nach einem der Ansprüche 1 bis 4, dadurch gekennzeichnet, dass die schrittweise Folge von Änderungen des Kippwinkels und die analoge Nachsteuerung der Position der Schweissköpfe (7) selbsttätig nach einem vorgegebenen Programm einer numerischen Steuerung vorgenommen werden.

6. Verfahren nach einem der Ansprüche 1 bis 5, dadurch gekennzeichnet, dass der Aufbau eines Bauteils (4) mit unterschiedlichen Krümmungsradien, wie z.B. ein Korbbogenboden oder ein elliptischer Boden nach einem entsprechend vorgegebenen Programm, von unten her aufbauend, mittels selbsttätiger Steuerung der Verstellbahn der Schweissköpfe (7) nach Massgabe der selbsttätigen, schrittweisen Kippneigung der Rotationsachse x-x des Bauteils (4) hergestellt wird.

## Claims

1. Process for the manufacture of a component (4) having rotationally symmetrical three-dimensional curved wall contours, from deposed metal so that it is constructed by means of shaping multi-layer build-up welding from the bottom upwards, whereby the built-up area (18) of the component (4) which is rotatable about its axis of rotation x-x is run along a continuous horizontal welding position by welding heads (7) which are not moved in the course of the building up of the deposited metal by at least one weld bead layer (17) in each case, whereby the axis of rotation x-x, is tilted in steps about a horizontal axis (19) which is perpendicular to the axis of rotation x-x according to the progress of the build-up of the deposited metal (17) in stages, characterised in that, the welding heads (7) are set or adjusted in such a way to adapt them to the tilting position of the axis of rotation x-x which is always changed in steps, also in steps and at the same time with their change by movement sequences which can be controlled in two directions, i.e. in the horizontal direction which is radial in the built-up area in relation to the wall contour and in the vertical direction with a clearance to the built-up area, that their path of adjustment is defined by contact points corresponding to the tilting position in question between the component contour and its corresponding vertical tangent and the welding heads (7) by running in this path of adjustment in a plane which is perpendicular to the tilting axis (19) produce the pre-determined three-dimensional curved shape of the component (4) automatically and in a programmable manner.

2. Process according to claim 1, characterised in that, a system of coordinates located in a plane which is perpendicular to the tilting axis (19), for preference with a centre at the tilting axis (19) is used for the programmed control of the path of adjustment to the welding heads (7).

3. Process according to claims 1 and 2, characterised in that, a tilting angle step is preset for each weld bead layer (17), which corresponds to the angular measurement of the complete curvature of the wall contour (16), divided by the number of weld bead layers (17) required for the formation of the component (4) in the range of curvature.

4. Process according to one of claims 1 to 3, characterised in that, the tilting angle is varied by one or more combined angle steps after the application of in each case one or more weld bead layers (17) which fill out the complete wall width of the component wall (16).

5. Process according to one of claims 1 to 4, characterised in that, the step-step sequence of variations in the tilting angle and the corresponding follow-up control of the position of the welding heads (7) is carried out automatically to a numerical control preset programme.

6. Process according to one of the claims 1 to 5, characterised in that, the formation of a component (4) with different radii of curvature, as for example a compound curve base or an elliptic base is effected according to an approximately pre-set programme from the bottom upwards by means of an automatic control of the path of adjustment of the welding heads (7) according to the automatic, step-by-step tilting inclination of the axis of rotation x-x of the component (4).

## Revendications

1. Procédé pour fabriquer en métal d'apport, une pièce (4) de révolution comportant des contours de parois courbés, en la façonnant du bas vers le haut par soudage d'apport en couches multiples, procédé dans lequel la zone d'apport (18) de cette pièce (4), susceptible de tourner autour de son axe de rotation x-x, est guidée en continu dans une position de soudage horizontale devant des têtes de soudage immobiles (7), au cours de dépôt de métal de soudage d'au moins respectivement une passe de soudage (17), l'axe de rotation x-x étant basculé progressivement, au fur et à mesure de la progression du dépôt par couches (17) du métal d'apport, autour d'un axe horizontal (19) perpendiculaire à l'axe de rotation x-x, procédé caractérisé en ce que les têtes de soudage (7) pour permettre leur adaptation à la position de basculement chaque fois modifiée progressivement de l'axe de rotation x-x, sont réglées ou bien réajustées également progressivement et simultanément à cette modification par des déplacements susceptibles d'être commandés dans deux directions, à savoir en direction horizontale radiale vers le contour (16) de la paroi dans la zone d'apport, et en direction verticale à une certaine distance de la zone d'apport, leur trajectoire de déplacement étant définie par les points de contact, correspondant à la position de basculement considérée, entre le contour de la pièce et sa tangente verticale respective, et les têtes de soudage (7), par guidage sur cette trajectoire de déplacement dans un plan perpendiculaire à l'axe de basculement (19), réalisant, de façon automatique et programmable, la forme de construction courbée prévue de la pièce (4).

2. Procédé selon la revendication 1, caractérisé en ce que pour la commande par programmes de la trajectoire de déplacement des têtes de soudage (7), on utilise un système de coordonnées se situant dans un plan perpendiculaire à l'axe de basculement (19) et ayant, de préférence son centre sur cet axe de basculement (19).

3. Procédé selon les revendications 1 et 2, caractérisé en ce que pour chaque passe de soudage (17), est prédéfini un pas angulaire de basculement qui correspond à la cote angulaire de l'ensemble de la courbure du contour de la paroi (16), divisée par le nombre de passes de soudage (17) nécessaires pour la réalisation de la pièce (4) dans la zone de courbure.

4. Procédé selon une des revendication 1 à 3, caractérisé en ce que l'angle de basculement, après apport de respectivement une ou plusieurs passes de soudage (17) remplissant toute la largeur de la paroi (16) de la pièce, est modifié d'un pas angulaire ou de plusieurs pas angulaires rassemblés.

5. Procédé selon une des revendications 1 à 4, caractérisé en ce que la succession progressive des modifications de l'angle de basculement et le réajustement analogique de la position des têtes de soudage (7), s'opèrent automatiquement d'après un programme prédéfini d'une commande numérique.

6. Procédé selon une des revendications 1 à 5, caractérisé en ce que la réalisation d'une pièce (4) comportant des rayons de courbure différents, tels que par exemple un fond en anse de panier ou bien un fond elliptique, est réalisée d'après un programme prédéfini de façon appropriée, en partant du bas, par commande automatique de la trajectoire à des têtes de soudage (7) au fur et à mesure de l'inclinaison automatique par basculement progressif de l'axe de rotation x-x de la pièce (4).

FiG.1

0 170 780

FIG.2

Fig.3

Fig.4